# DEMANDE DE BREVET EUROPEEN

(11) **EP 1 541 777 A1**
(43) Date de publication de la demande: **15.06.2005**
(21) Numéro de dépôt: 04300871.3
(22) Date de dépôt: 09.12.2004
(51) Int. Cl.: E04F 13/04, E04F 21/00, C09J 7/04

(54) **Bande de recouvrement pour masquer des raccords entre plaques ou panneaux**

(30) Priorité: 09.12.2003 FR 0314647
(71) Demandeur: ROCHE INVESTISSEMENTS, 42720 POUILLY SOUS CHARLIEU (FR)
(72) Inventeur: Roche, Pierre, 42190 CHANDON (FR)
(74) Mandataire: Thivillier, Patrick

(57) **Abrégé**

Cette bande de recouvrement pour masquer des raccords entre plaques ou panneaux, est remarquable en ce qu'elle comprend un support (1) sous forme d'un non tissé dont l'une des faces est soumise à l'action d'un adhésif (2) coopérant avec un élément protecteur (3), ledit support (1) étant micro-perforé.

## Description

L'invention concerne une bande de recouvrement pour masquer les lignes de raccordement entre des plaques ou panneaux posés en juxtaposition pour constituer des cloisons ou autres dans le domaine du bâtiment, notamment.

Ces bandes de recouvrement connues de l'homme du métier et généralement dénommées bandes à joint, sont destinées à être posées en recouvrement des lignes de raccordement résultant de l'assemblage en juxtaposition de plusieurs plaques ou panneaux. D'abord « marouflées » ou « serrées » dans l'enduit puis recouvertes par deux couches du même enduit, les bandes à joint évitent les fissurations en assurant la liaison entre les plaques de plâtre. En effet, dans le domaine de la construction, les cloisons intérieures ou autres sont le plus souvent réalisées à partir de carreaux ou plaques de plâtre notamment, présentant très souvent des agencements pour être positionnés et assemblés en juxtaposition, de manière à créer une surface plane généralement disposée dans un plan vertical. Avant de peindre, de tapisser ou autrement la traiter, il est nécessaire d'obturer les différentes lignes d'intersection. La bande à joint constitue une solution satisfaisante.

Dans une forme de réalisation, largement diffusée, la bande à joint se présente sous forme d'une bande en papier suffisamment rigide, qui nécessite, pour sa pose, d'appliquer un enduit en sous-couche. Ce type de bande nécessite certaines précautions d'emploi, compte tenu d'une relative fragilité. Par contre, grâce à sa faible épaisseur, elle peut facilement être camouflée. Elle est en outre d'un coût de revient réduit.

On a proposé également des bandes à joint sous forme d'un support souple constituant une grille dont l'une des faces est adhésivée pour être directement fixée au niveau des lignes de raccordement à recouvrir. Cette solution évite l'utilisation d'un enduit en sous-couche pour la fixation de la bande. Par contre, la bande représente une certaine épaisseur, de sorte que son camouflage par l'enduit extérieur est plus difficile à réaliser.

L'invention s'est fixée pour but de remédier à ces inconvénients, de manière simple, sûre, efficace et rationnelle.

Le problème que se propose de résoudre l'invention est de réaliser une bande à joint qui combine les avantages d'une bande à joint en papier avec ceux d'une bande à joint sous forme d'une grille adhésivée, telles que définies précédemment, en ayant pour objectif d'obtenir une bande à joint qui soit résistante, facile à poser et facilement camouflable.

Pour résoudre un tel problème, il a été conçu et mis au point une bande de recouvrement connue sous le nom de bande à joint qui comprend un support sous forme d'un non tissé dont l'une des faces est soumise à l'action d'un adhésif coopérant avec un élément protecteur.

Un autre problème que se propose de résoudre l'invention est de laisser passer l'air et l'enduit lorsque l'on applique la bande à joint. Dans ce but, le support est micro-perforé. Compte tenu de ces dispositions, on pose la bande à joint adhésivée, puis on recouvre largement d'enduit. La bande étant micro-perforée, l'air est chassé (évitant le phénomène de cloquage) et l'enduit de rebouchage passe à travers pour boucher les jours et assurer ainsi une bonne cohésion entre la bande à joint et le support.

Pour résoudre le problème posé d'obtenir un support présentant des qualités suffisantes au niveau notamment de sa résistance, de son épaisseur, le non tissé est un mono-filament 100 % polyester, de masse surfacique d'environ 30 g/m2.

Pour résoudre le problème posé d'obtenir une zone de fixation de la bande à joint, l'adhésif est sélectionné parmi les adhésifs acryliques en émulsion d'environ 30 g/m2.

L'invention est exposée ci-après plus en détail à l'aide des figures des dessins annexés dans lesquels :
- la figure 1 est une vue en plan d'une bande à joint selon l'invention montrant notamment le support sous forme d'un non tissé ;
- la figure 2 est une vue en coupe longitudinale considérée selon la ligne 2-2 de la figure 1 ; pour une meilleure compréhension de la suite de la description, les épaisseurs ont été volontairement exagérées ;
- la figure 3 est une vue en perspective montrant un exemple de réalisation de conditionnement de la bande à joint selon l'invention ;
- la figure 4 est une vue à caractère schématique montrant un exemple d'utilisation connu de la bande à joint selon l'invention.

Selon l'invention, la bande à joint, désignée dans son ensemble par (B), comprend un support (1) réalisé sous forme d'un non tissé. Avantageusement, ce non tissé est un mono-filament 100 % polyester, de masse surfacique d'environ 30 g/m2. Par exemple, le support non tissé utilisé est du type de celui connu sous la marque FREUDENBERG ou CARTIERE MARANO.

L'une des faces du support non tissé (1) est soumise à l'action d'un additif (2) par tout moyen connu et approprié, par exemple par enduction. L'adhésif utilisé est sélectionné parmi les adhésifs acryliques en émulsion d'environ 30 g/m2. Par exemple, cet adhésif est du type de ceux connus dans le commerce sous les appellations BOSTIK ou ATO-FINDLEY. D'une manière classique, la surface adhésivée (2) reçoit un élément protecteur (3) sous forme par exemple d'un papier siliconé. Chacune des faces de l'élément protecteur (3) peut être siliconée (80 g/m2) du type de ceux connus dans le commerce sous les appellations SOPAL ou APPLITEC.

A noter que le support non tissé (1) est réalisé sur tout type de machine parfaitement connu et approprié. Il en est de même en ce qui concerne l'application de l'adhésif (2) sur l'une des faces du support (1), avec l'élément protecteur (3).

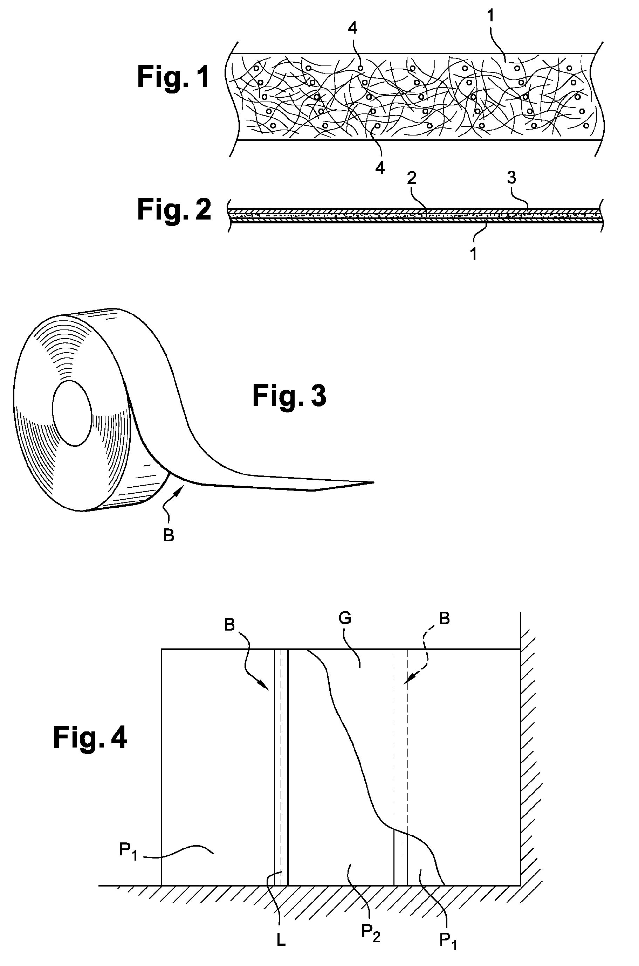

La bande à joint, selon les caractéristiques de l'invention, est réalisée d'une manière classique dans différentes largeurs, en fonction des applications recherchées. De même, cette bande est avantageusement conditionnée en rouleau (figure 3).
L'utilisation de la bande à joint est particulièrement simple. Au fur et à mesure de l'enlèvement de l'élément protecteur (3), il suffit d'appliquer le support non tissé (1) sur la ligne de raccordement (L) de deux plaques adjacentes (P1) et (P2), ledit support (1) étant maintenu par sa surface adhésivée (2). Etant donné que le support non tissé (1) est d'épaisseur de quelques microns, il est totalement camouflé par l'enduit de recouvrement (E), sans créer de proéminence (figure 4).

D'une manière importante, l'ensemble du support adhésivé (1) - (2) est micro-perforé (4) par tout moyen connu et approprié, pour laisser s'échapper l'air et boucher les jours lorsque l'on applique l'enduit de rebouchage (E).
Les avantages ressortent bien de la description.

## Revendications

1. Bande de recouvrement pour masquer des raccords entre plaques ou panneaux,
**caractérisée en ce qu'**elle comprend un support (1) sous forme d'un non tissé dont l'une des faces est soumise à l'action d'un adhésif (2) coopérant avec un élément protecteur (3), ledit support (1) étant micro-perforé.

2. Bande selon la revendication 1, **caractérisée en ce que** le non tissé (1) est un mono-filament 100 % polyester, de masse surfacique d'environ 30 g/m2.

3. Bande selon la revendication 1, **caractérisée en ce que** l'adhésif (2) est sélectionné parmi les adhésifs acryliques en émulsion d'environ 30 g/m2.

4. Bande selon la revendication 1, **caractérisée en ce que** l'élément protecteur (3) est un papier siliconé.

5. Bande selon la revendication 1, **caractérisée en ce qu'**elle est conditionnée en rouleau.
